# EUROPEAN PATENT SPECIFICATION

(11) **EP 2 840 388 B1**
(45) Date of publication and mention of the grant of the patent: **17.04.2019**
(21) Application number: 13777733.0
(22) Date of filing: 19.04.2013
(51) Int. Cl.: G01N 27/409, G01N 27/407

(54) **GAS SENSOR**
GASSENSOR
DÉTECTEUR DE GAZ

(30) Priority: 20.04.2012 JP 2012096821; 05.03.2013 JP 2013042957
(43) Date of publication of application: 25.02.2015
(73) Proprietor: Denso Corporation, Kariya-shi, Aichi 448-8661 (JP)
(72) Inventor: NAKAMURA, Masatake, Kariya-city Aichi 448-8661 (JP); MORIWAKI, Junji, Kariya-city Aichi 448-8661 (JP); KOIE, Kazutoshi, Kariya-city Aichi 448-8661 (JP)
(74) Representative: TBK
(86) International application number: PCT/JP2013/061648
(87) International publication number: WO 2013/157636

(56) References cited:
- EP-A2- 2 154 524
- EP-A2- 2 388 577
- DE-A1-102006 029 631
- JP-A- 2000 121 599
- JP-A- 2008 501 107
- JP-A- 2011 106 962
- JP-A- 2011 145 235
- JP-A- 2012 002 803
- US-A1- 2004 144 645

## Description

The present invention relates to gas sensors that sense the concentration of a specific component in a measurement gas (i.e., a gas to be measured).

Conventionally, there have been known gas sensors that are provided in, for example, the exhaust system of an internal combustion engine of a motor vehicle to measure the concentration of a specific component, such as oxygen or nitrogen oxides, in the exhaust gas which is the measurement gas.

Specifically, the gas sensors include, for example, a sensor element that senses the concentration of the specific component in the measurement gas, a housing that has the sensor element inserted therein, and an element cover arranged on the distal side of the housing.

Moreover, the gas sensors are configured so as to allow the exhaust gas, which is the measurement gas, to make contact with the surface of the sensor element. However, during a cold start of the engine, condensate water, which is produced by the condensation of steam included in the exhaust gas, may flow along with the exhaust gas to the sensor element, adhering to the surface of the sensor element. On the other hand, the sensor element is used in a state of being heated to a high temperature so as to activate a solid electrolyte body of the sensor element. Consequently, due to the adhering of the condensate water to the surface of the sensor element, large thermal shock may be applied to the sensor element, thereby damaging the sensor element.

To solve the above problem, JP 2007 316 051 A (Patent Document 1) discloses a gas sensor which includes a double-structured element cover that consists of an inner cover covering a distal end portion of the sensor element and an outer cover arranged outside the inner cover.

Specifically, in the gas sensor, the exhaust gas and the condensate water, which are introduced via outer openings of the outer cover, are separated from each other in the space between the outer and inner covers. Then, the condensate water is discharged out of the outer cover via discharge openings of the outer cover, while only the exhaust gas is further introduced into the inner cover via inner openings of the inner cover. Consequently, it becomes possible to suppress intrusion of the condensate water into the inner cover while sufficiently introducing the exhaust gas into the inner cover. As a result, it becomes possible to prevent the sensor element from being damaged due to the condensate water while securing sufficient responsiveness of the gas sensor.

However, when the above-described gas sensor disclosed in Patent Document 1 is used in a diesel engine where particulate matter (to be referred to as PM hereinafter) is produced, the PM may flow along with the exhaust gas to the gas sensor, adhering to the outer cover. Moreover, the PM may intrude, along with the exhaust gas, into the outer cover via the outer openings of the outer cover, adhering to the inner cover. Consequently, the PM may deposit in the vicinities of the outer openings of the outer cover and the inner openings of the inner cover, thereby impeding the introduction of the exhaust gas into the inner cover and thus lowering the responsiveness of the gas sensor.

Furthermore, a gas sensor according to the preamble of claim 1 is known from EP 2 154 524 A2. Further gas sensors are disclosed in US 2004/144645 A1, EP 2 388 577 A2 and DE 10 2006 029 631 A1.

The present invention has been made in view of the above circumstances and it is the object of the present invention to provide a gas sensor which can prevent its responsiveness from being lowered due to the deposition of PM and are excellent in both resistance to water damage and responsiveness.

According to the present invention, the above object is solved with a gas sensor having the features of claim 1.

In the gas sensor according to the present invention, the tubular protective cover, which is open on the distal side, is arranged radially outside the outer cover so as to cover the outer introduction hole. Between the outer cover and the protective cover, there is formed the predetermined interspace. Consequently, with the protective cover covering the outer introduction hole, it is possible to suppress: intrusion of condensate water and coarse PM (e.g., particle diameters being greater than or equal to 0.1µm), which have flowed to the gas sensor along with the measurement gas, directly into the outer cover (or to the space between the outer cover and the inner cover) via the outer introduction hole; and deposition of the PM in the vicinity of the outer introduction hole.

On the other hand, the measurement gas will flow into the protective cover (or to the interspace between the protective cover and the outer cover) from the distal side where the protective cover is open and be introduced into the outer cover via the outer introduction hole. Consequently, it is possible to sufficiently introduce the measurement gas into the outer cover.

Moreover, in the inner cover, there is formed the reduced-diameter shoulder portion whose diameters are reduced distalward. The reduced-diameter shoulder portion is axially positioned between the outer introduction hole and the inner introduction hole. Consequently, even if the condensate water has intruded, along with the measurement gas, into the outer cover via the outer introduction hole, it is still possible to cause the condensate water to collide against the reduced-diameter shoulder portion intervening between the outer introduction hole and the inner introduction hole, thereby suppressing the condensate water from reaching the inner introduction hole. Moreover, it is also possible to discharge, via the outer discharge hole, the condensate water which has collided against the reduced-diameter shoulder portion. As a result, it is possible to suppress the condensate water from intruding into the inner cover via the inner introduction hole.

Moreover, the following relationship is satisfied: A/B ≤ 2.1, where A is the inner diameter of the inner cover and B is the maximum radial length of the distal end portion of the sensor element. That is, the inner diameter A of the inner cover is specified to be less than or equal to 2.1 times the maximum radial length B of the distal end portion of the sensor element, thereby making the distance between the inner cover and the distal end portion of the sensor element moderately small. Therefore, when the distal end portion of the sensor element is heated by, for example, a heater, it is possible to sufficiently increase the temperature of the inner cover with the heat of the sensor element. Consequently, even if fine PM (e.g., particle diameters being less than 0.1 µm) has intruded along with the measurement gas into the outer cover via the outer introduction hole, it is still possible to suppress the fine PM from adhering to the inner cover.

That is, the above effect is achieved by utilizing a phenomenon called thermophoresis. Here, thermophoresis is a phenomenon that when fine particles exist in a space having a temperature gradient, the particles receive more energy from the high-temperature side than from the low-temperature side and thus move from the high-temperature side to the low-temperature side (or become difficult to move from the low-temperature side to the high-temperature side). Specifically, with reduction in the distance between the inner cover and the distal end portion of the sensor element, the temperature of the inner cover is increased by the heat of the sensor element to become higher than the temperature of the measurement gas. Consequently, it is possible to make the fine PM, which has intruded along with the measurement gas into the outer cover, difficult to move from the measurement gas side (i.e., the low-temperature side) to the inner cover side (i.e., the high-temperature side), i.e., difficult to adhere to the inner cover. As a result, it is possible to suppress the fine PM from adhering to the inner cover and depositing in the vicinity of the inner introduction hole.

Moreover, the fine PM, which has intruded into the outer cover, will be discharged via the outer discharge hole without adhering to the inner cover. Furthermore, even if the fine PM has intruded along with the measurement gas into the inner cover via the inner introduction hole, the fine PM will be finally discharged, by the above-described phenomenon of thermophoresis, along with the measurement gas via the inner discharge hole without adhering to the inner cover.

On the other hand, the measurement gas which has been introduced into the outer cover will pass the space between the outer cover and the inner cover and be introduced into the inner cover via the inner introduction hole. Consequently, it becomes possible to sufficiently introduce the measurement gas into the inner cover.

As above, the gas sensor can suppress the deposition of PM in the vicinities of the outer introduction hole and the inner introduction hole, thereby preventing the responsiveness of the gas sensor from being lowered due to the deposition of PM. Moreover, the gas sensor can suppress intrusion of the condensate water into the element cover (outer cover, inner cover), thereby preventing the sensor element from being damaged due to the condensate water and thus improving the resistance of the gas sensor to water damage. Furthermore, the gas sensor can sufficiently introduce the measurement gas into the sensor cover (outer cover, inner cover), thereby sufficiently securing the responsiveness of the gas sensor 1.

As described above, according to the present invention, it is possible to provide the gas sensor which can prevent its responsiveness from being lowered due to the deposition of PM and are excellent in both resistance to water damage and responsiveness.

### [BRIEF DESCRIPTION OF THE DRAWINGS]

FIG. 1 is a schematic cross-sectional view illustrating the overall structure of a gas sensor according to a first example.
FIG. 2 is an enlarged cross-sectional view illustrating a distal end portion of the gas sensor according to the first example.
FIG. 3 is a cross-sectional view taken along the line III-III in FIG. 2.
FIG. 4 is an enlarged cross-sectional view illustrating a distal end portion of a gas sensor according to one modification of the first example.
FIG. 5 is an enlarged cross-sectional view illustrating a distal end portion of a gas sensor according to another modification of the first example.
FIG. 6 is an enlarged cross-sectional view illustrating a distal end portion of a gas sensor according to a second example.
FIG. 7 is an enlarged cross-sectional view illustrating a distal end portion of a gas sensor according to a third example.
FIG. 8 is a graph illustrating the relationship, determined by an experiment, between A/B and the relative amount of adhering PM.
FIG. 9 is a graph illustrating the relationship, determined by the experiment, between relative distance and the relative amount of adhering PM.
FIG. 10 is a graph illustrating the relationship, determined by the experiment, between response time and the distance between an outer cover and a protective cover.
FIG. 11 is a graph illustrating the relationship, determined by the experiment, between response time deterioration rate and the distance between the outer cover and the protective cover.
FIG. 12 is a graph illustrating the relationship, determined by the experiment, between water damage area and the distance between the outer cover and the protective cover.
FIG. 13 is a graph illustrating the relationship, determined by the experiment, between response time and the distance between a reduced-diameter shoulder portion of an inner cover and the outer cover.
FIG. 14 is a graph illustrating the relationship, determined by the experiment, between response time deterioration rate and the distance between the reduced-diameter shoulder portion of the inner cover and the outer cover.
FIG. 15 is a graph illustrating the relationship, determined by the experiment, between water damage area and the distance between the reduced-diameter shoulder portion of the inner cover and the outer cover.
FIG. 16 is a graph illustrating the relationship, determined by the experiment, between response time and the protruding amount of the outer cover.
FIG. 17 is a graph illustrating the relationship, determined by the experiment, between response time deterioration rate and the protruding amount of the outer cover.
FIG. 18 is a graph illustrating the relationship, determined by the experiment, between water damage area and the protruding amount of the outer cover.

### [EMBODIMENTS FOR CARRYING OUT THE INVENTION]

In the above gas sensor, the protective cover is arranged so as to completely cover the outer introduction hole of the outer cover, with the predetermined interspace formed between the outer cover and the protective cover. Consequently, when the gas sensor is viewed from the radially outside, the outer introduction hole is shielded by the protective cover and thus not viewable.

Moreover, the inner diameter A of the inner cover and the maximum radial length B of the distal end portion of the sensor element are respectively the inner diameter of the inner cover and the maximum radial length of the distal end portion of the sensor element in a region where the inner cover and the distal end portion of the sensor element radially face each other.

Moreover, in cases where the relationship between the inner diameter A of the inner cover and the maximum radial length B of the distal end portion of the sensor element is A/B > 2.1, it may be impossible to sufficiently increase the temperature of the inner cover with the heat of the sensor element.

Moreover, in the case of specifying the relationship between the inner diameter A of the inner cover and the maximum radial length B of the distal end portion of the sensor element to be A/B ≤ 2.1 and thereby increasing the temperature of the inner cover with the heat of the sensor element, the temperature of the inner cover is increased to be higher than the temperature of the measurement gas (more specifically, the temperature of the measurement gas which has been introduced into the element cover). It is preferable that the temperature of the inner cover is higher than the temperature of the measurement gas by, for example, 50°C or more.

Moreover, it is also preferable that the inner diameter A of the inner cover and the maximum radial length B of the distal end portion of the sensor element satisfy the following relationship: A/B ≥ 1.4. For example, in cases where A/B < 1.4, during the manufacturing process, the sensor element may make contact with the inner cover, thereby being damaged.

Moreover, the inner diameter A of the inner cover may be set to be, for example, in the range of 6.5-7.5mm. On the other hand, the maximum radial length B of the distal end portion of the sensor element may be set to be, for example, in the range of 3.7-4.5mm.

Moreover, the reduced-diameter shoulder portion of the inner cover may be configured so that at least part of the reduced-diameter shoulder portion is provided proximalward from a position which is axially distant from the distal end of the sensor element by C, where C is the maximum radial distance between the distal end portion of the sensor element and the inner cover.

In this case, it is possible to reduce the volume of that part of the inner cover which is on the distal side of the reduced-diameter shoulder portion, thereby making it possible to efficiently heat the space within the inner cover with the heat of the sensor element. Consequently, it is possible to sufficiently increase the temperature of the distal end portion of the inner cover which is far away from the sensor element, thereby sufficiently suppressing PM from adhering to the inner cover.

In addition, the maximum distance C may be set to be, for example, in the range of 1.2-2.9mm.

Moreover, it is preferable that the radial distance between the outer cover and the protective cover at the axial position of the outer introduction hole is in the range of 0.5-2mm.

In this case, it is possible to sufficiently secure flow of the measurement gas between the outer cover and the protective cover, thereby sufficiently introducing the measurement gas into the outer cover via the outer introduction hole. Moreover, by the protective cover, it is also possible to sufficiently suppress intrusion of the condensate water and coarse PM into the outer cover via the outer introduction hole.

Moreover, in cases where the radial distance between the outer cover and the protective cover is less than 0.5mm, the responsiveness of the gas sensor may be lowered due to PM depositing on the outer cover or the protective cover. On the other hand, in cases where the radial distance between the outer cover and the protective cover is greater than 2mm, it may be impossible to, by the protective cover, sufficiently suppress intrusion of the condensate water and coarse PM into the outer cover via the outer introduction hole.

Moreover, it is preferable that the distance between the reduced-diameter shoulder portion of the inner cover and the outer cover is in the range of 0.5-1.5mm.

In this case, it is possible to sufficiently secure flow of the measurement gas between the reduced-diameter shoulder portion of the inner cover and the outer cover. Moreover, it is also possible to make it easy for the condensate water which has intruded into the outer cover to collide against the reduced-diameter shoulder portion of the inner cover.

Moreover, in cases where the distance between the reduced-diameter shoulder portion of the inner cover and the outer cover is less than 0.5mm, the responsiveness of the gas sensor may be lowered due to PM depositing between the reduced-diameter shoulder portion of the inner cover and the outer cover. On the other hand, in cases where the distance between the reduced-diameter shoulder portion of the inner cover and the outer cover is greater than 1.5mm, the condensate water which has intruded into the outer cover may reach the inner introduction hole without colliding against the reduced-diameter shoulder portion of the inner cover.

Moreover, the diameter of the inner introduction hole may be set to be, for example, 1.5mm or less.

In this case, it is possible to prevent the condensate water which has intruded into the outer cove from further intruding into the inner cover via the inner introduction hole.

Moreover, the outer cover may be configured to protrude distalward from the protective cover.

In this case, it is possible to cause the measurement gas to flow into the interspace between the outer cover and the protective cover after making contact with the outer cover. Consequently, it is possible to sufficiently introduce the measurement gas into the outer cover via the outer introduction hole.

In addition, to sufficiently achieve the above effect, it is preferable that the outer cover protrudes axially distalward from the protective cover by 2mm or more. On the other hand, to sufficiently secure the resistance of the gas sensor to water damage, it is preferable that the protruding amount of the outer cover is 4.5mm or less.

Moreover, the outer discharge hole may be formed in the distal end portion of the outer cover.

In this case, it is easy for the condensate water which has intruded into the outer cover to be discharged via the outer discharge hole. Consequently, it is possible to improve the resistance of the gas senor to water damage.

Moreover, the inner discharge hole may be formed in the distal end portion of the inner cover.

In this case, the measurement gas which has been introduced into the inner cover will be discharged via the inner discharge hole to produce negative pressure in the vicinity of the inner discharge hole, thereby making it easy for the measurement gas to be introduced into the inner cover via the inner introduction hole. Consequently, it is possible to improve the responsiveness of the gas sensor.

Moreover, the distal end surface of the inner cover may be arranged on the distal side of the distal end surface of the outer cover to improve the responsiveness of the gas sensor, or on the proximal side of the distal end surface of the outer cover to improve the resistance of the gas sensor to water damage. Furthermore, to secure both the responsiveness of the gas sensor and the resistance of the gas sensor to water damage in a balanced manner, the distal end surface of the inner cover and the distal end surface of the outer cover may be arranged to lie in substantially the same plane.

Moreover, to facilitate the increasing of the temperature of the inner cover by the heat of the sensor element, a blackening process is performed on the inner surface of the inner cover in the emissivity range of, for example, 0.4-0.8.

Furthermore, to suppress the adhering and deposition of PM and facilitate flow of the measurement gas, a smoothing process may be performed on the surfaces of the inner cover, outer cover and protective cover.

### [EXAMPLES]

### [First Example]

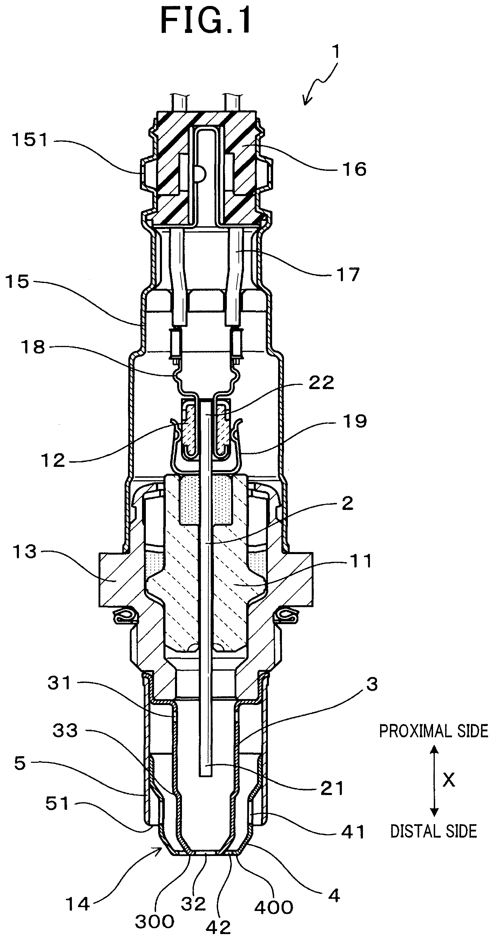

As shown in FIGS. 1-3, a gas sensor 1 according to the present example includes a sensor element 2 that senses the concentration of a specific component in a measurement gas (i.e., a gas to be measured), a housing 13 that has the sensor element 2 inserted therein, and an element cover 14 arranged on the distal side of the housing 13.

The element cover 14 includes an inner cover 3 that is arranged so as to cover a distal end portion 21 of the sensor element 2 and an outer cover 4 that is arranged outside the inner cover 3. The outer cover 4 has outer introduction holes 41 for introducing the measurement gas and an outer discharge hole 42 formed on the distal side of the outer introduction holes 41. The inner cover 3 has inner introduction holes 31 for introducing the measurement gas, which are formed on the proximal side of the outer introduction holes 41, and an inner discharge hole 32 formed on the distal side of the inner introduction holes 31.

As shown in FIGS. 1-3, a tubular protective cover 5, which are open on the distal side, are arranged radially outside the outer cover 4 so as to cover the outer introduction holes 41. Between the outer cover 4 and the protective cover 5, there is provided a predetermined interspace.

In the inner cover 3, there is formed a reduced-diameter shoulder portion (or taper portion) 33 whose outer diameter decreases distalward. The reduced-diameter shoulder portion 33 is positioned between the outer introduction holes 41 and the inner introduction holes 31 in the axial direction X of the gas sensor 1. Moreover, the following relationship is satisfied: A/B ≤ 2.1, where A is an inner diameter of the inner cover 3 and B is a maximum diameter of the distal end portion 21 of the sensor element 2.

Hereinafter, the configuration of the gas sensor 1 according to the present example will be described in detail.

As shown in FIG. 1, in the present example, the term "distal side" denotes one side in the axial direction X of the gas sensor 1, where the gas sensor 1 is exposed to the measurement gas. Moreover, the term "proximal side" denotes the opposite side to the distal side.

In the gas sensor 1, the plate-shaped sensor element 2 is inserted and held in a first insulator 11. A heater (not shown in the figures) is built in the distal end portion 21 of the sensor element 2. Moreover, the first insulator 11 is held in the housing 13.

As shown in FIG. 1, to the proximal end of the housing 13, there is fixed a proximal-side cover 15 so as to cover a proximal end portion 22 of the sensor element 2. In the proximal-side cover 15, there are formed vent holes 151 for introducing air. Moreover, a proximal-side opening of the proximal-side cover 15 is closed by a seal member 16 which is implemented by a rubber bush. In the seal member 16, there are arranged a plurality of lead members 17 so as to penetrate the seal member 16. The lead members 17 are to be connected to external.

As shown in FIG. 1, in the proximal-side cover 15, there is arranged, on the proximal side of the first insulator 11, a second insulator 12 that holds the proximal end portion 22 of the sensor element 2. In the second insulator 12, there are arranged metal terminals 18 that are connected to the lead members 17. The metal terminals 18 are in contact with and thereby electrically connected to electrode terminals of the sensor element 2. Moreover, the second insulator 12 is pressed and thereby held by a spring member 19.

As shown in FIG. 1, the element cover 14 is arranged on the distal side of the housing 13. The element cover 14 includes the inner cover 3, which has a bottomed cylindrical shape and is arranged so as to cover the distal end portion 21 of the sensor element 2, and the outer cover 4 that also has a bottomed cylindrical shape and is arranged outside the inner cover 3. The inner cover 3 is fixed to the distal end of the housing 13. Moreover, the outer cover 4 is fixed to the protective cover 5 which will be described later.

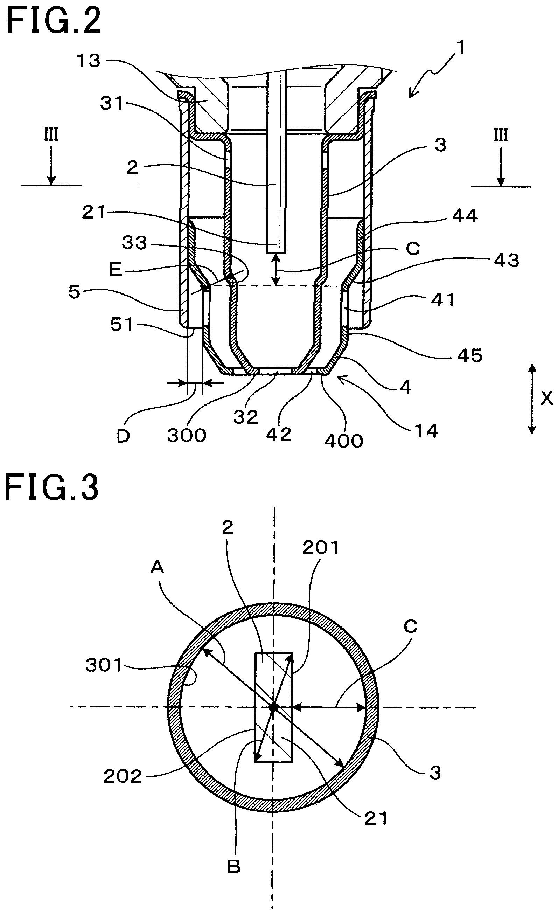

As shown in FIG. 2, in a side wall of the outer cover 4, there are formed the plurality of outer introduction holes 41 for introducing the measurement gas into the outer cover 4. Moreover, in the side wall of the outer cover 4, there are formed, on the proximal side of the outer introduction holes 41, a tapered outer reduced-diameter portion 43 whose diameters are reduced distalward. Furthermore, in the side wall of the outer cover 4, there are formed, on the proximal side of the outer reduced-diameter portion 43, an outer proximal end portion 44 whose diameters are substantially constant in the axial direction X. The outer proximal end portion 44 is fixed to an inner side surface of the protective cover 5 which will be described later.

In a distal end portion of the outer cover 4, there is formed the outer discharge hole 42. The outer discharge hole 42 is located on the distal side of the outer introduction holes 41.

As shown in FIG. 2, in a side wall of the inner cover 3, there are formed the plurality of inner introduction holes 31 for introducing the measurement gas into the inner cover 3. The diameter of the inner introduction holes 31 is less than or equal to 1.5mm. Moreover, in the side wall of the inner cover 3, there are formed, on the distal side of the inner introduction holes 31, the tapered reduced-diameter shoulder portion 33 whose diameters are reduced distalward.

In a distal end portion of the inner cover 3, there is formed the inner discharge hole 32. The inner discharge hole 32 is located on the distal side of the inner introduction holes 31. Moreover, a distal end surface 300 of the inner cover 3 and a distal end surface 400 of the outer cover 4 are arranged to lie in substantially the same plane.

Moreover, as shown in FIG. 3, the following relationship is satisfied: A/B ≤ 2.1, where A is the inner diameter of the inner cover 3 and B is the maximum diameter of the distal end portion 21 of the sensor element 2. Moreover, in the present example, the following relationship is also satisfied: A/B ≥ 1.4. That is, the inner diameter A of the inner cover 3 is 1.4-2.1 times the maximum radial length B of the distal end portion 21 of the sensor element 2. In the present example, the maximum radial length B of the distal end portion 21 of the sensor element 2 is represented by the length of a diagonal of a cross section of the distal end portion 21 of the sensor element 2 perpendicular to the axial direction X. In addition, FIG. 3 shows only the sensor element 2 and the inner cover 3.

Moreover, as shown in FIG. 2, the reduced-diameter shoulder portion 33 is positioned between the outer introduction holes 41 and the inner introduction holes 31 in the axial direction X. Moreover, the reduced-diameter shoulder portion 33 is formed proximalward from a position which is distant from the distal end of the sensor element 2 by C in the axial direction X, where C is the maximum radial distance between the distal end portion 21 of the sensor element 2 and the inner cover 3 (see FIG. 3). In the present example, as shown in FIG. 3, the maximum radial distance C is represented by the maximum distance between the major surfaces 201 and 202 of the sensor element 2 and the inner side surface 301 of the inner cover 3.

Moreover, the distance E between the reduced-diameter shoulder portion 33 of the inner cover 3 and the outer cover 4 is in the range of 0.5-1.5mm.

As shown in FIG. 2, on the radially outside of the outer cover 4, there is arranged the cylindrical protective cover 5 so as to cover the outer introduction holes 41. Between the outer cover 4 and the protective cover 5, there is provided the predetermined interspace. In the present example, the protective cover 5 completely covers the outer introduction holes 41 from the radially outside. Consequently, when the gas sensor 1 is viewed from the radially outside, the outer introduction holes 41 is shielded by the protective cover 5 and thus not viewable. Moreover, the protective cover 5 extends proximalward from the outer cover 5 and is fixed, together with the inner cover 3, to the distal end of the housing 13. Moreover, the protective cover 5 defines, between itself and the outer cover 4, a distal-side opening 51 which is open on the distal side. To the inner side surface of the protective cover 5, there is fixed the outer proximal end portion 44 of the outer cover 4.

As shown in FIG. 2, the radial distance D between the outer cover 4 and the protective cover 5 at the axial position of the outer introduction holes 41 is in the range of 0.5-2mm.

Moreover, the outer cover 4 protrudes distalward from the protective cover 5. Furthermore, the outer cover 4 has an outer constant-diameter portion 45 whose diameters are substantially constant in the axial direction X. The outer constant-diameter portion 45 has the outer introduction holes 41 formed therein and is positioned on the distal side of the outer reduced-diameter portion 43. The outer constant-diameter portion 45 protrudes distalward from the protective cover 5 by 1mm or more.

Next, advantageous effects of the gas sensor 1 according to the present example will be described.

In the gas sensor 1 according to the present example, the tubular protective cover 5, which is open on the distal side, is arranged radially outside the outer cover 4 so as to cover the outer introduction holes 41. Between the outer cover 4 and the protective cover 5, there is formed the predetermined interspace. Consequently, with the protective cover 5 covering the outer introduction holes 41, it is possible to suppress: intrusion of condensate water and coarse PM (e.g., particle diameters being greater than or equal to 0.1µm), which have flowed to the gas sensor 1 along with the measurement gas, directly into the outer cover 4 (or to the space between the outer cover 4 and the inner cover 3) via the outer introduction holes 41; and deposition of the PM in the vicinities of the outer introduction holes 41.

On the other hand, the measurement gas will flow into the protective cover 5 (or to the interspace between the protective cover 5 and the outer cover 4) from the distal side where the protective cover 5 is open and be introduced into the outer cover 4 via the outer introduction holes 41. Consequently, it is possible to sufficiently introduce the measurement gas into the outer cover 4.

Moreover, in the inner cover 3, there is formed the reduced-diameter shoulder portion 33 whose diameters are reduced distalward. The reduced-diameter shoulder portion 33 is positioned between the outer introduction holes 41 and the inner introduction holes 31 in the axial direction X. Consequently, even if the condensate water has intruded, along with the measurement gas, into the outer cover 4 via the outer introduction holes 41, it is still possible to cause the condensate water to collide against the reduced-diameter shoulder portion 33 intervening between the outer introduction holes 41 and the inner introduction holes 31, thereby suppressing the condensate water from reaching the inner introduction holes 31. Moreover, it is also possible to discharge, via the outer discharge hole 42, the condensate water which has collided against the reduced-diameter shoulder portion 33. As a result, it is possible to suppress the condensate water from intruding into the inner cover 3 via the inner introduction holes 31.

Moreover, the following relationship is satisfied: A/B ≤ 2.1, where A is the inner diameter of the inner cover 3 and B is the maximum radial length of the distal end portion 21 of the sensor element 2. That is, the inner diameter A of the inner cover 3 is specified to be less than or equal to 2.1 times the maximum radial length B of the distal end portion 21 of the sensor element 2, thereby making the distance between the inner cover 3 and the distal end portion 21 of the sensor element 2 moderately small. Therefore, when the distal end portion 21 of the sensor element 2 is heated by, for example, a heater, it is possible to sufficiently increase the temperature of the inner cover 3 with the heat of the sensor element 2. Consequently, even if fine PM (e.g., particle diameters being less than 0.1µm) has intruded along with the measurement gas into the outer cover 4 via the outer introduction holes 41, it is still possible to suppress the fine PM from adhering to the inner cover 3.

That is, the above effect is achieved by utilizing a phenomenon called thermophoresis. Here, thermophoresis is a phenomenon that when fine particles exist in a space having a temperature gradient, the particles receive more energy from the high-temperature side than from the low-temperature side and thus move from the high-temperature side to the low-temperature side (or become difficult to move from the low-temperature side to the high-temperature side). Specifically, with reduction in the distance between the inner cover 3 and the distal end portion 21 of the sensor element 2, the temperature of the inner cover 3 is increased by the heat of the sensor element 2 to become higher than the temperature of the measurement gas. In the present example, the temperature of the inner cover 3 is increased to be higher, by 50°C or more, than the temperature of the measurement gas introduced into the element cover 14 (outer cover 4, inner cover 3). Consequently, it is possible to make the fine PM, which has intruded along with the measurement gas into the outer cover 4, difficult to move from the measurement gas side (i.e., the low-temperature side) to the inner cover 3 side (i.e., the high-temperature side), i.e., difficult to adhere to the inner cover 3. As a result, it is possible to suppress the fine PM from adhering to the inner cover 3 and depositing in the vicinities of the inner introduction holes 31.

Moreover, the fine PM, which has intruded into the outer cover 4, will be discharged via the outer discharge hole 42 without adhering to the inner cover 3. Furthermore, even if the fine PM has intruded along with the measurement gas into the inner cover 3 via the inner introduction holes 31, the fine PM will be finally discharged, by the above-described phenomenon of thermophoresis, along with the measurement gas via the inner discharge hole 32 without adhering to the inner cover 3.

On the other hand, the measurement gas which has been introduced into the outer cover 4 will pass the space between the outer cover 4 and the inner cover 3 and be introduced into the inner cover 3 via the inner introduction holes 31. Consequently, it becomes possible to sufficiently introduce the measurement gas into the inner cover 3.

As above, the gas sensor 1 according to the present example can suppress the deposition of PM in the vicinities of the outer introduction holes 41 and the inner introduction holes 31, thereby preventing the responsiveness of the gas sensor 1 from being lowered due to the deposition of PM. Moreover, the gas sensor 1 can suppress intrusion of the condensate water into the element cover 14 (outer cover 4, inner cover 3), thereby preventing the sensor element 2 from being damaged due to the condensate water and thus improving the resistance of the gas sensor 1 to water damage. Furthermore, the gas sensor 1 can sufficiently introduce the measurement gas into the sensor cover 14 (outer cover 4, inner cover 3), thereby sufficiently securing the responsiveness of the gas sensor 1.

In addition, in the present example, between the inner diameter A of the inner cover 3 and the maximum radial length B of the distal end portion 21 of the sensor element 2, the following relationship is also satisfied: A/B ≥ 1.4. Consequently, during the manufacturing process, it is possible to prevent the sensor element 2 from making contact with the inner cover 3, thereby preventing damage of the sensor element 2.

Moreover, the reduced-diameter shoulder portion 33 of the inner cover 3 is provided proximalward from the position which is distant from the distal end of the sensor element 2 by C in the axial direction X, where C is the maximum radial distance between the distal end portion 21 of the sensor element 2 and the inner cover 3. Therefore, it is possible to reduce the volume of that part of the inner cover 3 which is on the distal side of the reduced-diameter shoulder portion 33, thereby making it possible to efficiently heat the space within the inner cover 3 with the heat of the sensor element 2. Consequently, it is possible to sufficiently increase the temperature of the distal end portion of the inner cover 3 which is far away from the sensor element 2, thereby sufficiently suppressing PM from adhering to the inner cover 3.

Moreover, the radial distance D between the outer cover 4 and the protective cover 5 at the axial position of the outer introduction holes 41 is in the range of 0.5-2mm. Consequently, it is possible to sufficiently secure flow of the measurement gas between the outer cover 4 and the protective cover 5, thereby sufficiently introducing the measurement gas into the outer cover 4 via the outer introduction holes 41. Moreover, by the protective cover 5, it is also possible to sufficiently suppress intrusion of the condensate water and coarse PM into the outer cover 4 via the outer introduction holes 41.

Moreover, the distance E between the reduced-diameter shoulder portion 33 of the inner cover 3 and the outer cover 4 is in the range of 0.5-1.5mm. Consequently, it is possible to sufficiently secure flow of the measurement gas between the reduced-diameter shoulder portion 33 of the inner cover 3 and the outer cover 4. Moreover, it is also possible to make it easy for the condensate water which has intruded into the outer cover 4 to collide against the reduced-diameter shoulder portion 33 of the inner cover 3.

Moreover, the diameter of the inner introduction holes 31 is less than or equal to 1.5mm. Consequently, it is possible to prevent the condensate water which has intruded into the outer cover 4 from further intruding into the inner cover 3 via the inner introduction holes 31.

Moreover, the outer cover 4 protrudes distalward from the protective cover 5. Therefore, it is possible to cause the measurement gas to flow into the interspace between the outer cover 4 and the protective cover 5 after making contact with the outer cover 4 (more specifically with the outer constant-diameter portion 45 of the outer cover 4). Consequently, it is possible to sufficiently introduce the measurement gas into the outer cover 4 via the outer introduction holes 41.

Moreover, the outer discharge hole 42 is formed in the distal end portion of the outer cover 4. Therefore, it is easy for the condensate water which has intruded into the outer cover 4 to be discharged via the outer discharge hole 42. Consequently, it is possible to improve the resistance of the gas senor 1 to water damage.

Moreover, the inner discharge hole 32 is formed in the distal end portion of the inner cover 3. Therefore, the measurement gas which has been introduced into the inner cover 3 will be discharged via the inner discharge hole 32 to produce negative pressure in the vicinity of the inner discharge hole 32, thereby making it easy for the measurement gas to be introduced into the inner cover 3 via the inner introduction holes 31. Consequently, it is possible to improve the responsiveness of the gas sensor 1.

As above, according to the present example, it is possible to provide the gas sensor 1 which can prevent its responsiveness from being lowered due to the deposition of PM and are excellent in both resistance to water damage and responsiveness.

In addition, in the present example, to secure both responsiveness and resistance to water damage in a balanced manner, as shown in FIGS. 1-2, the distal end surface 300 of the inner cover 3 and the distal end surface 400 of the outer cover 4 are arranged to lie in substantially the same plane.

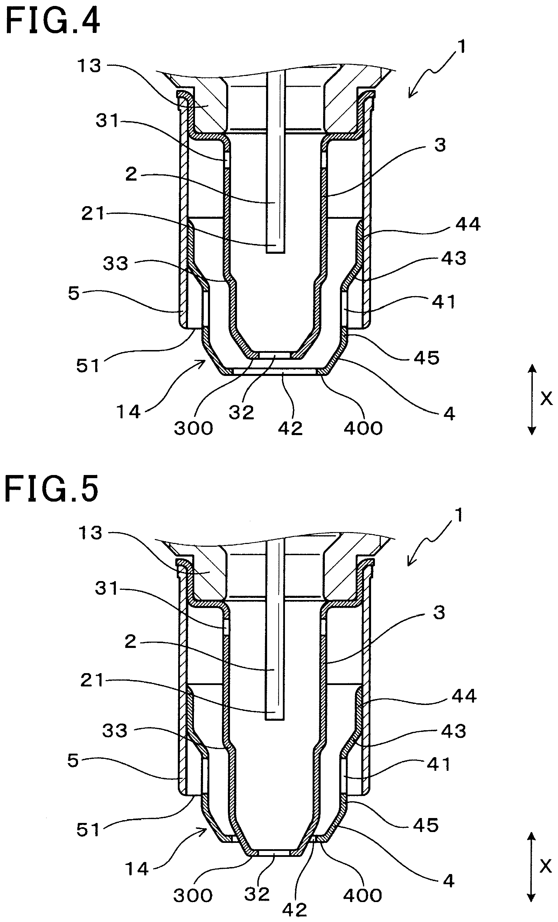

However, to improve resistance to water damage, it is possible to arrange the distal end surface 300 of the inner cover 3 on the proximal side of the distal end surface 400 of the outer cover 4 as shown in FIG. 4. In contrast, to improve responsiveness, it is possible to arrange the distal end surface 300 of the inner cover 3 on the distal side of the distal end surface 400 of the outer cover 4 as shown in FIG. 5.

### (Second Example)

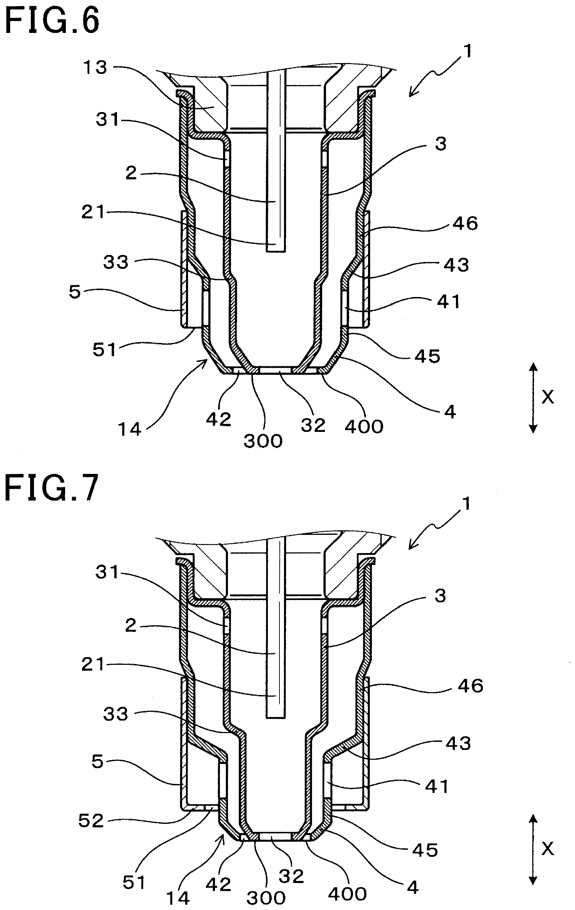

In this example, as shown in FIG. 6, the configuration of the outer cover 4 and the protective cover 5 is modified.

In the present example, as shown in the figure, the outer cover 4 is formed to extend proximalward from the protective cover 5, and fixed to the distal end of the housing 13 together with the inner cover 3. Moreover, the protective cover 5 is fixed to a fixing portion 46 of the side wall of the outer cover 4; the fixing portion 46 is on the proximal side of the outer reduced-diameter portion 43.

The other basic configuration and advantageous effects of the present example are the same as the first example.

### (Third Example)

In this example, as shown in FIG. 7, the configuration of the protective cover 5 is modified.

In the present example, as shown in the figure, at the distal end of the protective cover 5, there is formed a protruding portion 52 that protrudes radially inward. Moreover, the protective cover 5 has a distal-side opening 51 that is formed between the protruding portion 52 and the outer cover 4 to open on the distal side.

The other basic configuration and advantageous effects of the present example are the same as the second example.

### (Experiment)

The present experiment has been conducted to make various evaluations for gas sensors.

In the present experiment, for gas sensors having different values of A/B (A: the inner diameter of the inner cover, B: the maximum radial length of the distal end portion of the sensor element), the relative amount of adhering PM was determined and the effect of suppressing the adhering of PM was evaluated.

For evaluating the effect of suppressing the adhering of PM, first, in a test specimen which simulated a gas sensor, the relationship between ΔT (°C) and the relative amount of adhering PM (%) was determined by a simulation, where ΔT was the difference between the temperature of the measurement gas and the temperature of the inner cover and the amount of adhering PM was the amount of PM adhering to the inner cover. Here, the relative amount of adhering PM (%) was calculated using the following equation: the relative amount of adhering PM = ((the amount of adhering PM when ΔT = x°C (x ≠ 0)) / (the amount of adhering PM when ΔT = 0°C)) × 100. Next, in the gas sensors having different values of A/B, the temperature differences ΔT (°C) was determined according the values of A/B. Thereafter, the relationship between A/B and the relative amount of adhering PM (%) was determined.

The results of the above evaluation will be described.

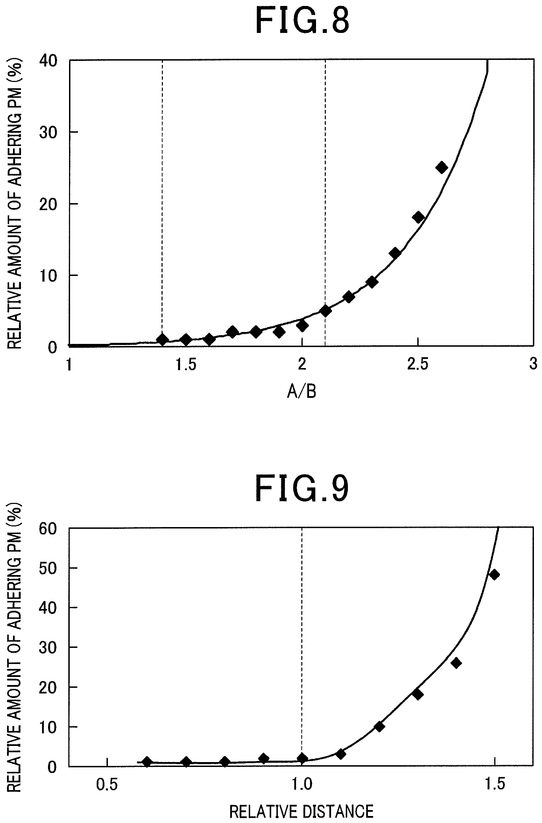

FIG. 8 is a graph illustrating the relationship between A/B and the relative amount of adhering PM.

From the figure, it can be seen that the relative amount of adhering PM increased rapidly and thus the effect of suppressing the adhering of PM was lowered from when A/B exceeded 2.1.

Moreover, the occurrence of defects during the manufacturing process, such as damage of the sensor element caused by contact between the sensor element and the inner cover, was investigated. As a consequence, the occurrence of defects was observed when A/B decreased below 1.4.

As can be seen from the above results, in the gas sensors, by satisfying the relationship A/B ≤ 2.1 between the inner diameter A of the inner cover and the maximum radial length B of the distal end portion of the sensor element, it is possible to sufficiently achieve the effect of suppressing the adhering of PM.

Moreover, considering the case of assembly of parts, it is preferable that A/B ≥ 1.4.

Next, for gas sensors having different axial distances from the distal end of the sensor element to the reduced-diameter shoulder portion of the inner cover, the relative amount of adhering PM was determined and the effect of suppressing the adhering of PM was evaluated. The way of determining the relative amount of adhering PM was the same as described above.

The results of the above evaluation will be described.

FIG. 9 is a graph illustrating the relationship between relative distance and the relative amount of adhering PM. Here, the relative distance denotes the ratio of the axial distance from the distal end of the sensor element to the reduced-diameter shoulder portion of the inner cover to the maximum radial distance C between the distal end portion of the sensor element and the inner cover.

From the figure, it can be seen that the relative amount of adhering PM increased rapidly and thus the effect of suppressing the adhering of PM was lowered from when the relative distance exceeded 1 (from when the axial distance from the distal end of the sensor element to the reduced-diameter shoulder portion of the inner cover increased to become equal to the maximum distance C).

As can be seen from the above results, in the gas sensors, considering the effect of suppressing the adhering of PM, it is preferable that at least part of the reduced-diameter shoulder portion of the inner cover is provided proximalward from the position which is axially distant from the distal end of the sensor element by C, where C is the maximum radial distance between the distal end portion of the sensor element and the inner cover.

Next, for gas sensors, response time, response time deterioration rate and water damage area were determined and the effect of suppressing the adhering of PM, responsiveness and resistance to water damage were evaluated; for those gas sensors, the distance between the outer cover and the protective cover at the axial position of the outer introduction holes, the distance between the reduced-diameter shoulder portion of the inner cover and the outer cover, and the protruding amount of the outer cover distalward from the protective cover were varied.

With regard to response time, at a condition where the flow speed of gas was 2m/s, the oxygen concentration of the gas was changed to a predetermined percentage and the time, for which a change in the sensor output according to the concentration change was produced, was determined as the response time (s).

With regard to response time deterioration rate, the response time was determined after performing a PM-adhering test for a predetermined number of cycles. The response time was determined in the same way as described above. The PM-adhering test was performed at a condition (e.g., low engine speed, high load) where a large amount of PM was produced. Then, the response time deterioration rate was determined using the following equation: the response time deterioration rate = (the initial response time) / (the response time after performing the PM-adhering test).

With regard to water damage area, an appropriate amount of water was injected to the gas sensor, and the area of those parts of the surface of the sensor element to which the condensate water had adhered was determined as the water damage area (mm²).

The results of the above various evaluations will be described.

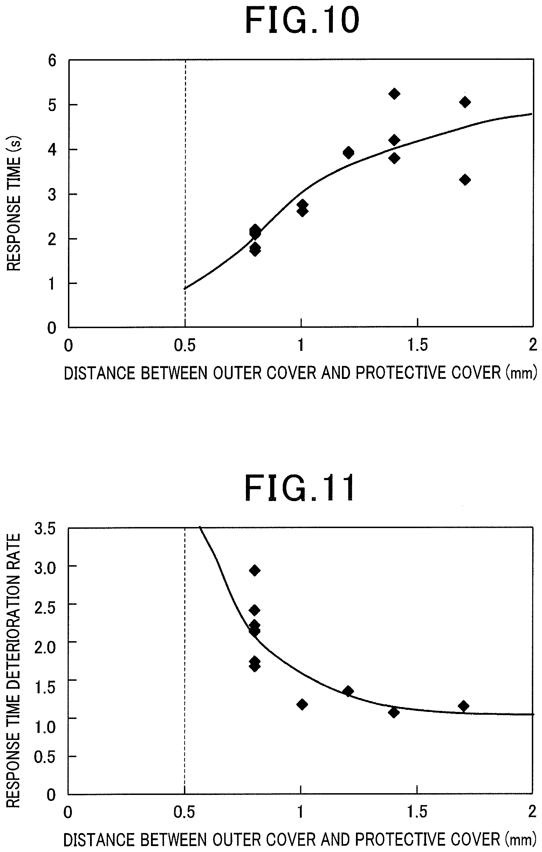

FIGS. 10-12 are graphs respectively illustrating the relationships of the radial distance between the outer cover and the protective cover at the axial position of the outer introduction holes with the response time, the response time deterioration rate and the water damage area.

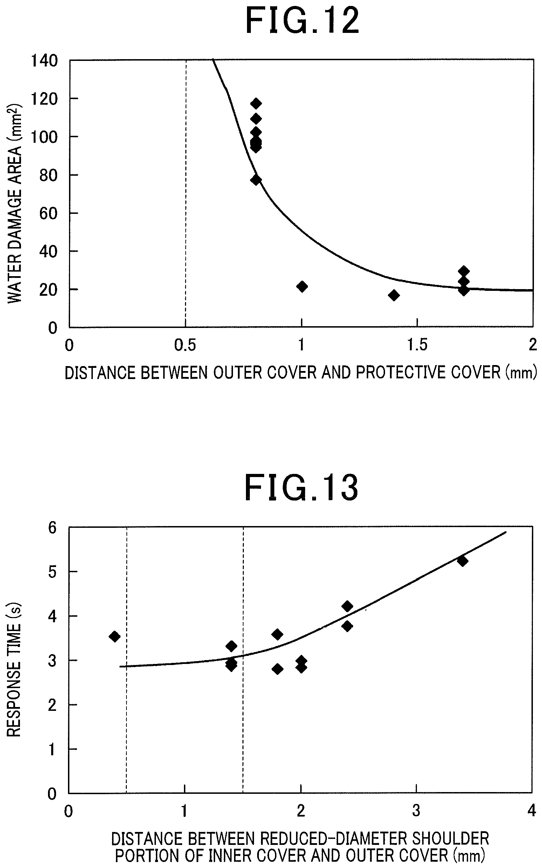

From FIG. 10, it can be seen that when the radial distance between the outer cover and the protective cover was less than or equal to 2mm, the response time was shortened and thus the responsiveness was improved. Moreover, from FIG. 11, it can be seen that when the above radial distance was greater than or equal to 0.5mm, the response time deterioration rate was lowered and the effect of suppressing the adhering of PM was improved. Furthermore, from FIG. 12, it can be seen that when the above radial distance was greater than or equal to 0.5mm, the water damage area was reduced and thus the resistance to water damage was improved.

As can be seen from the above results, in the gas sensors, considering the effect of suppressing the adhering of PM, the resistance to water damage and the responsiveness, it is preferable that the radial distance between the outer cover and the protective cover at the axial position of the outer introduction holes is in the range of 0.5-2mm.

Further, considering the case of assembly of parts, it is preferable that the radial distance between the outer cover and the protective cover is greater than or equal to 0.5mm.

Moreover, FIGS. 13-15 are graphs respectively illustrating the relationships of the distance between the reduced-diameter shoulder portion of the inner cover and the outer cover with the response time, the response time deterioration rate and the water damage area.

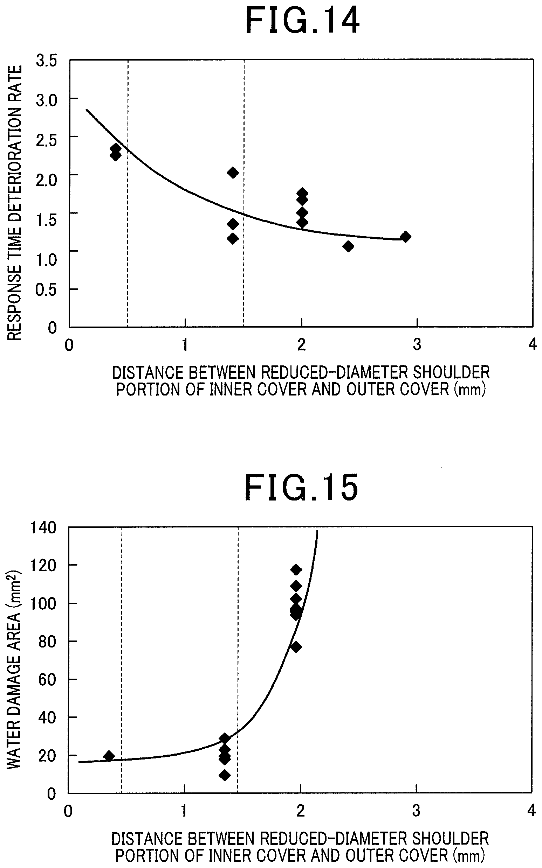

From FIG. 13, it can be seen that when the distance between the outer cover and the protective cover exceeded 1.5mm, the response time was increased and thus the responsiveness was lowered. Moreover, from FIG. 14, it can be seen that when the above distance was greater than or equal to 0.5mm, the response time deterioration rate was lowered and the effect of suppressing the adhering of PM was improved. Furthermore, from FIG. 15, it can be seen that when the above distance exceeded 1.5mm, the water damage area was increased and thus the resistance to water damage was lowered.

As can be seen from the above results, in the gas sensors, considering the effect of suppressing the adhering of PM, the resistance to water damage and the responsiveness, it is preferable that the distance between the reduced-diameter shoulder portion of the inner cover and the outer cover is in the range of 0.5-1.5mm.

Further, considering the case of assembly of parts, it is preferable that the distance between the reduced-diameter shoulder portion of the inner cover and the outer cover is greater than or equal to 0.5mm.

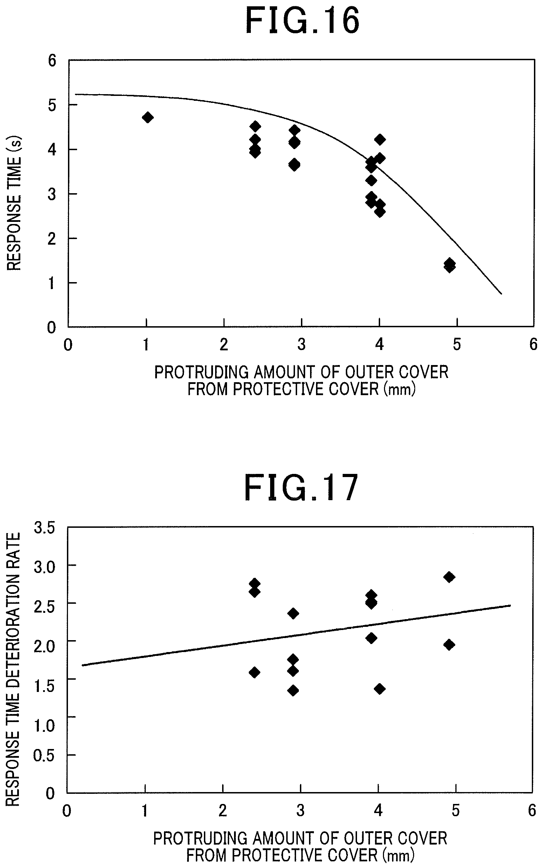

Moreover, FIGS. 16-18 are graphs respectively illustrating the relationships of the protruding amount of the outer cover distalward from the protective cover with the response time, the response time deterioration rate and the water damage area.

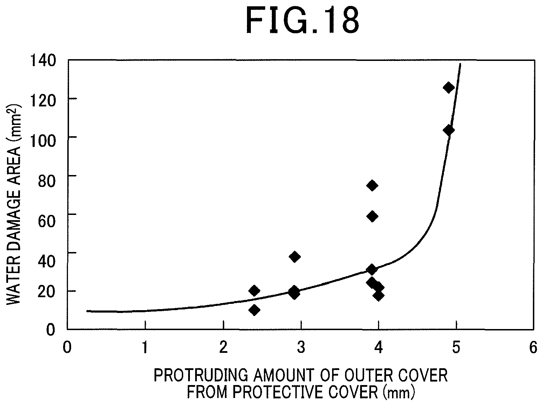

From FIG. 16, it can be seen that when the protruding amount of the outer cover exceeded 0mm, the response time was shortened and thus the responsiveness was improved. In particular, when the protruding amount exceeded 2mm, the effect became much greater. Moreover, from FIG. 17, it can be seen that the response time deterioration rate was kept almost constant and the effect of suppressing the adhering of PM was maintained even when the protruding amount of the outer cover exceeded 0mm. Furthermore, from FIG. 18, it can be seen that when the protruding amount of the outer cover exceeded 4.5mm, the water damage area was increased and thus the resistance to water damage was lowered.

As can be seen from the above results, in the gas sensors, considering the effect of suppressing the adhering of PM, the resistance to water damage and the responsiveness, it is preferable that the outer cover protrudes distalward from the protective cover. Moreover, it is further preferable that the protruding amount of the outer cover is greater than or equal to 2mm and lower than or equal to 4.5mm.

### [DESCRIPTION OF REFERENCE SIGNS]

- 1: gas sensor
- 13: housing
- 14: element cover
- 2: sensor element
- 21: distal end portion (distal end portion of sensor element)
- 3: inner cover
- 31: inner introduction holes
- 32: inner discharge hole
- 33: reduced-diameter shoulder portion
- 4: outer cover
- 41: outer introduction holes
- 42: outer discharge hole
- 5: protective cover

## Claims

1. A gas sensor (1) comprising:
a sensor element (2) that senses the concentration of a specific component in a measurement gas;
a housing (13) that has the sensor element (2) inserted therein; and
an element cover (14) arranged on a distal side of the housing (13),
wherein
the element cover (14) includes an inner cover (3) arranged so as to cover a distal end portion (21) of the sensor element (2) and an outer cover (4) arranged outside the inner cover (3),
the outer cover (4) has an outer introduction hole (41) for introducing the measurement gas and an outer discharge hole (42) formed on the distal side of the outer introduction hole (41),
the inner cover (3) has an inner introduction hole (31) for introducing the measurement gas, which is formed on a proximal side of the outer introduction hole (41), and an inner discharge hole (32) formed on the distal side of the inner introduction hole (31),
in the inner cover (3), there is formed a reduced-diameter shoulder portion (33) whose diameters are reduced distalward,
the reduced-diameter shoulder portion (33) is axially positioned between the outer introduction hole (41) and the inner introduction hole (31), and
the following relationship is satisfied: A/B ≤ 2.1, where A is an inner diameter of the inner cover (3) and B is a maximum radial length of the distal end portion (21) of the sensor element (2), wherein
at least part of the reduced-diameter shoulder portion (33) of the inner cover (3) is provided proximalward from a position which is axially distant from a distal end of the sensor element (2) by C, where C is a maximum radial distance between the distal end portion (21) of the sensor element (2) and the inner cover (3) **characterized in that**
a tubular protective cover (5), which is open on the distal side, is arranged radially outside the outer cover (4) so as to completely cover the outer introduction hole (41),
between the outer cover (4) and the protective cover (5), there is formed a predetermined interspace, and
a blackening process is performed on the inner surface of the inner cover (3).

2. The gas sensor (1) as set forth in Claim 1, wherein a radial distance between the outer cover (4) and the protective cover (5) at an axial position of the outer introduction hole (41) is in the range of 0.5-2mm.

3. The gas sensor (1) as set forth in any Claim 1 or 2, wherein a distance between the reduced-diameter shoulder portion (33) of the inner cover (3) and the outer cover (4) is in the range of 0.5-1.5mm.

4. The gas sensor (1) as set forth in any one of Claims 1-3, wherein the outer cover (4) protrudes distalward from the protective cover (5).

5. The gas sensor (1) as set forth in any one of Claims 1-4, wherein the outer discharge hole (42) is formed in a distal end portion of the outer cover (4).

6. The gas sensor (1) as set forth in any one of Claims 1-5, wherein the inner discharge hole (32) is formed in a distal end portion of the inner cover (3).

## Patentansprüche

1. Gassensor (1), der Folgendes aufweist:
ein Sensorelement (2), das die Konzentration einer bestimmten Komponente in einem Messgas erfasst;
ein Gehäuse (13), in dem das Sensorelement (2) eingesetzt ist; und
eine Elementabdeckung (14), die auf einer distalen Seite des Gehäuses (13) angeordnet ist,
wobei
die Elementabdeckung (14) eine Innenabdeckung (3), die derart angeordnet ist, dass sie einen distalen Endabschnitt (21) des Sensorelements (2) abdeckt, und eine Außenabdeckung (4) hat, die außerhalb der Innenabdeckung (3) angeordnet ist,
die Außenabdeckung (4) ein äußeres Einleitungsloch (41) zum Einleiten des Messgases und ein äußeres Abgabeloch (42) hat, das auf der distalen Seite des äußeren Einleitungslochs (41) ausgebildet ist,
die Innenabdeckung (3) ein auf einer proximalen Seite des äußeren Einleitungslochs (41) ausgebildetes inneres Einleitungsloch (31) zum Einleiten des Messgases und ein auf der distalen Seite des inneren Einleitungslochs (31) ausgebildetes inneres Abgabeloch (32) hat,
in der Innenabdeckung (3) ein Schulterabschnitt (33) mit reduziertem Durchmesser ausgebildet ist, dessen Durchmesser distalwärts reduziert sind,
der Schulterabschnitt (33) mit reduziertem Durchmesser axial zwischen dem äußeren Einleitungsloch (41) und dem inneren Einleitungsloch (31) positioniert ist, und
die folgende Beziehung erfüllt ist: A/B ≤ 2,1, wobei A ein Innendurchmesser der Innenabdeckung (3) und B eine maximale radiale Länge des distalen Endabschnitts (21) des Sensorelements (2) ist, wobei
mindestens ein Teil des Schulterabschnitts (33) mit reduziertem Durchmesser der Innenabdeckung (3) proximalwärts von einer Position bereitgestellt ist, die axial von einem distalen Ende des Sensorelements (2) um C entfernt ist, wobei C ein maximaler radialer Abstand zwischen dem distalen Endabschnitt (21) des Sensorelements (2) und der Innenabdeckung (3) ist, **dadurch gekennzeichnet, dass**
eine rohrförmige Schutzabdeckung (5), die auf der distalen Seite offen ist, radial außerhalb der Außenabdeckung (4) angeordnet ist, um das äußere Einleitungsloch (41) vollständig abzudecken,
zwischen der Außenabdeckung (4) und der Schutzabdeckung (5) ein vorbestimmter Zwischenraum gebildet ist, und
ein Schwärzungsprozess an der Innenfläche der Innenabdeckung (3) durchgeführt wird.

2. Gassensor (1) nach Anspruch 1, wobei ein radialer Abstand zwischen der Außenabdeckung (4) und der Schutzabdeckung (5) an einer axialen Position des äußeren Einleitungslochs (41) in dem Bereich von 0,5-2mm liegt.

3. Gassensor (1) nach Anspruch 1 oder 2, wobei ein Abstand zwischen dem Schulterabschnitt (33) mit reduziertem Durchmesser der Innenabdeckung (3) und der Außenabdeckung (4) in dem Bereich von 0,5-1,5 mm liegt.

4. Gassensor (1) nach einem der Anspruch 1 bis 3, wobei die Außenabdeckung (4) distalwärts von der Schutzabdeckung (5) vorsteht.

5. Gassensor (1) nach einem der Ansprüche 1 bis 4, wobei das äußere Abgabeloch (42) in einem distalen Endabschnitt der Außenabdeckung (4) ausgebildet ist.

6. Gassensor (1) nach einem der Ansprüche 1 bis 5, wobei das innere Abgabeloch (32) in einem distalen Endabschnitt der Innenabdeckung (3) ausgebildet ist.

## Revendications

1. Capteur de gaz (1) comprenant :
un élément de capteur (2) qui détecte la concentration d'un composant spécifique dans un gaz de mesure ;
un boîtier (13) qui a l'élément de capteur (2) inséré à l'intérieur de ce dernier ; et
un couvercle d'élément (14) agencé sur un côté distal du boîtier (13), dans lequel :
le couvercle d'élément (14) comprend un couvercle interne (3) agencé afin de recouvrir une partie d'extrémité distale (21) de l'élément de capteur (2) et un couvercle externe (4) agencé à l'extérieur du couvercle interne (3),
le couvercle externe (4) a un trou d'introduction externe (41) pour introduire le gaz de mesure et le trou de décharge externe (42) formé sur le côté distal du trou d'introduction externe (41),
le couvercle interne (3) a un trou d'introduction interne (31) pour introduire le gaz de mesure, qui est formé sur un côté proximal du trou d'introduction externe (41), et un trou de décharge interne (32) formé sur le côté distal du trou d'introduction interne (31),
dans le couvercle interne (3), on forme une partie d'épaulement de diamètre réduit (33) dont les diamètres sont réduits de manière distale,
la partie d'épaulement de diamètre réduit (33) est positionnée de manière axiale entre le trou d'introduction externe (41) et le trou d'introduction interne (31), et
la relation suivante est satisfaite : A/B ≤ 2,1, où A est un diamètre interne du couvercle interne (3) et B est une longueur radiale maximum de la partie d'extrémité distale (21) de l'élément de capteur (2), dans lequel :
au moins une partie de la partie d'épaulement de diamètre réduit (33) du couvercle interne (3) est prévue de manière proximale à partir d'une position qui est axialement à distance d'une extrémité distale de l'élément de capteur (2) selon C, où C est une distance radiale maximum entre la partie d'extrémité distale (21) de l'élément de capteur (2) et le couvercle interne (3), **caractérisé en ce que** :
un couvercle de protection tubulaire (5) qui est ouvert sur le côté distal, est agencé de manière radiale à l'extérieur du couvercle externe (4) afin de recouvrir complètement le trou d'introduction externe (41),
entre le couvercle externe (4) et le couvercle de protection (5), on forme un espace intermédiaire prédéterminé, et
un processus de noircissement est réalisé sur la surface interne du couvercle interne (3).

2. Capteur de gaz (1) selon la revendication 1, dans lequel une distance radiale entre le couvercle externe (4) et le couvercle de protection (5) dans une position axiale du trou d'introduction externe (41) est dans la plage de 0,5 à 2 mm.

3. Capteur de gaz (1) selon l'une quelconque des revendications 1 ou 2, dans lequel une distance entre la partie d'épaulement de diamètre réduit (33) du couvercle interne (3) et du couvercle externe (4) est dans la plage de 0,5 à 1,5 mm.

4. Capteur de gaz (1) selon l'une quelconque des revendications 1 à 3, dans lequel le couvercle externe (4) fait saillie de manière distale à partir du couvercle de protection (5).

5. Capteur de gaz (1) selon l'une quelconque des revendications 1 à 4, dans lequel le trou de décharge externe (42) est formé dans une partie d'extrémité distale du couvercle externe (4).

6. Capteur de gaz (1) selon l'une quelconque des revendications 1 à 5, dans lequel le trou de décharge interne (32) est formé dans une partie d'extrémité distale du couvercle interne (3).
